# EUROPÄISCHE PATENTSCHRIFT

(11) **EP 2 692 650 B1**
(45) Veröffentlichungstag und Bekanntmachung des Hinweises auf die Patenterteilung: **18.02.2015**
(21) Anmeldenummer: 13003837.5
(22) Anmeldetag: 01.08.2013
(51) Int. Cl.: B65B 43/46, B65G 17/32, B65B 7/16, B65G 47/90

(54) **Schalenverschließmaschine**
Jacket closing machine
Machine de fermeture de coques

(30) Priorität: 03.08.2012 DE 102012015401
(43) Veröffentlichungstag der Anmeldung: 05.02.2014
(73) Patentinhaber: Multivac Sepp Haggenmüller GmbH & Co. KG, 87787 Wolfertschwenden (DE)
(72) Erfinder: Ickert, Lars, 87437 Kempten (DE); Wagner, Christoph, 87724 Ottobeuren (DE)
(74) Vertreter: Grünecker, Kinkeldey, Stockmair & Schwanhäusser

(56) Entgegenhaltungen:
- EP-A1- 2 468 633
- WO-A1-2007/107703
- DE-A1-102008 030 510
- DE-A1-102010 014 212

## Beschreibung

Die Erfindung bezieht sich auf eine Schalenverschließmaschine gemäß dem Oberbegriff des Anspruchs 1.

Es ist aus der DE 10 2008 030 510 A1 eine gattungsgemäße Schalenverschließmaschine bekannt, die ein Greifersystem aufweist, um Schalen, die einspurig auf Transportbändern zugeführt werden, auf einem Sammelband so zu positionieren, dass sie beidseitig von Schalengreifern erfasst werden können, um sie in eine Siegelvorrichtung zu übergeben. Dabei erfassen die Schalengreifer beidseitig eine Gruppe von Schalen und schieben diese in die Siegelvorrichtung. Hierbei beeinflusst die Reibung des Schalenbodens auf dem Transportband und die Reibung in der Siegelvorrichtung auf Stütztellern und einer Schalenaufnahme die Schalen in der Art, dass diese zum Kippen in Transportrichtung neigen. Dies gilt es zu vermeiden. Bei Einsatz von unterschiedlichen Schalenhöhen sind Schalengreifer vorgesehen, die beispielsweise aus DE 10 2010 014 212 A1 bekannt sind, und die mehrere Rillen in vertikaler Richtung aufweisen. Diese Ausführung ist aufwendig und führt zu erhöhtem Gewicht und damit Trägheitsmasse, die stark beschleunigt und bewegt werden muss.

Die WO 2007/107703 A1 offenbart ebenfalls eine Schalenverschließmaschine mit einem Greifersystem, um Schalen von einem Transportsystem abzunehmen und in eine Siegelvorrichtung zu übergeben.

Aufgabe der vorliegenden Erfindung ist es, eine Schalenverschließmaschine zur Verfügung zu stellen, die einen Schalentransport bereitstellt, der möglichst unabhängig ist von der Reibung zwischen Schalenboden und Transportband.

Diese Aufgabe wird gelöst durch eine Schalenverschließmaschine mit den Merkmalen des Anspruchs 1. Vorteilhafte Weiterbildungen der Erfindung sind in den Unteransprüchen angegeben.

Die erfindungsgemäße Schalenverschließmaschine umfasst ein Greifersystem gemäß Anspruch 1 . Die Schalenverschließmaschine zeichnet sich auch dadurch aus, dass das Greifersystem dazu konfiguriert ist, aufgenommene Schalen um eine horizontale und in Transportrichtung ausgerichtete Drehachse zu kippen. Dies bringt den Vorteil mit sich, dass die Schalen während des Transports nicht oder zumindest nicht flächig mit dem Sammelband, dem Abführband oder Teilen der Verschließstation in Kontakt stehen und somit keine negative Beeinflussung durch Reibung vorhanden ist.

Vorzugsweise umfasst das Greifersystem einen Elektromotor zum Kippen der Schalengreifer um die Drehachse. Hierbei kann die Verstellung sehr flexibel und dynamisch erfolgen, um sich an verschiedene Produkte, beispielsweise feste, pastöse oder flüssige Produkte, anpassen zu können.

Bevorzugt ist die Drehachse für die Kippbewegung eine Drehachse einer Parallelogrammmechanik, wobei die Parallelogrammmechanik dazu konfiguriert ist, die Greiferarme zu den Schalen hin und von ihnen weg zu bewegen.

In einer vorteilhaften Ausführung weist die Parallelogrammmechanik einen Hebel auf, mittels dessen der Schalengreifer kippbar ist.

Erfindungsgemäß weist das Greifersystem zwei Führungen für die zwei Greiferarme auf und die Führungen sind mittels eines Verstellantriebs vertikal bewegbar, um die Schalengreifer vertikal verstellen zu können, beispielsweise für eine Anpassung an verschiedene Schalenhöhen.

Der vertikale Verstellantrieb weist bevorzugt einen Elektromotor auf, beispielsweise einen Servomotor, um die Schalengreifer dynamisch auf verschiedene Höhen verstellen zu können.

Im Folgenden wird ein vorteilhaftes Ausführungsbeispiel der Erfindung anhand einer Zeichnung näher erläutert. Im Einzelnen zeigen:
- Fig. 1: eine schematische Gesamtansicht einer Schalenverschließmaschine,
- Fig. 2: eine schematische Ansicht der Maschine ohne Verkleidung,
- Fig. 3: eine schematische Ansicht eines Schalengreifers,
- Fig. 4a: eine Schnittansicht in Transportrichtung des Greifersystems in geöffneter Stellung,
- Fig. 4b: eine Schnittansicht des Greifersystems in geschlossener Stellung,
- Fig. 4c: eine Schnittansicht des Greifersystems in gekippter Stellung, und
- Fig. 5: eine erfindungsgemäß Ausführungsvariante eines vertikal verstellbaren Greifersystems mit einer Schalengreifervariante.

Gleiche Komponenten sind in den Figuren durchgängig mit gleichen Bezugszeichen versehen.

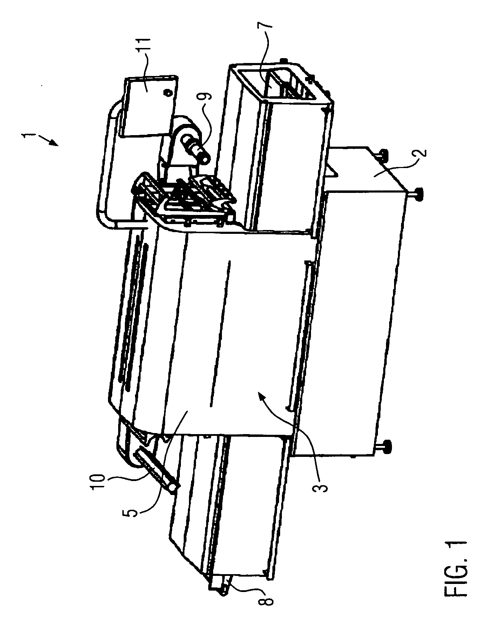

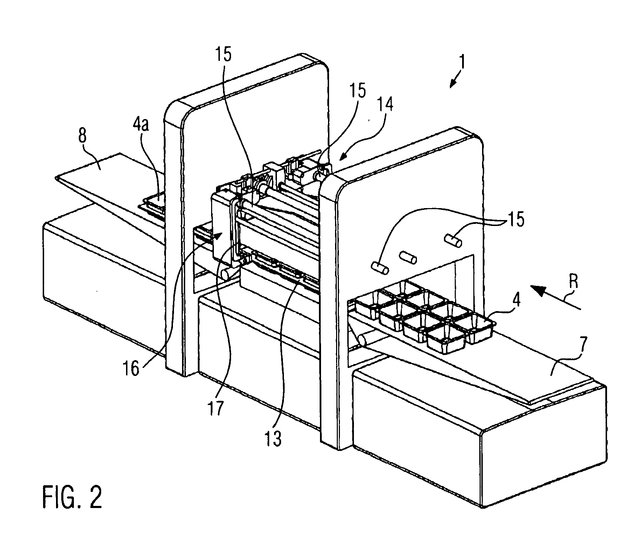

Figur 1 zeigt in perspektivischer Ansicht eine Schalenverschließmaschine. Die Verpackungsmaschine 1 verfügt über ein Maschinengestell 2, auf dem eine Verschließvorrichtung 3 zum Verschließen sowie gegebenenfalls zum Siegeln und/oder Evakuieren und/oder Begasen von zugeführten Schalen 4 (siehe Fig. 2), sowie zum Schneiden von einer zum Verschließen verwendeten, nicht dargestellten Deckelfolie angeordnet ist. Die Verschließstation 3 befindet sich unter einer Schutzabdeckung 5.

Die Verpackungsmaschine 1 verfügt ferner über ein Förderband oder Sammelband 7 zum Zuführen der mit Produkt gefüllten Schalen 4, ein Abführband 8 zum Abtransportieren der verschlossenen Schalen 4a, eine Folienzuführrolle 9 zum Aufnehmen und Zuführen einer Deckelfolie, sowie einen Restfolienaufwickler 10 zum Aufwickeln der nach dem Versiegeln verbleibenden Folienbahn der Deckelfolie. Eine Anzeige 11 ermöglicht dem Bediener der Verpackungsmaschine 1 das Überprüfen und Steuern des Betriebs der Verpackungsmaschine 1.

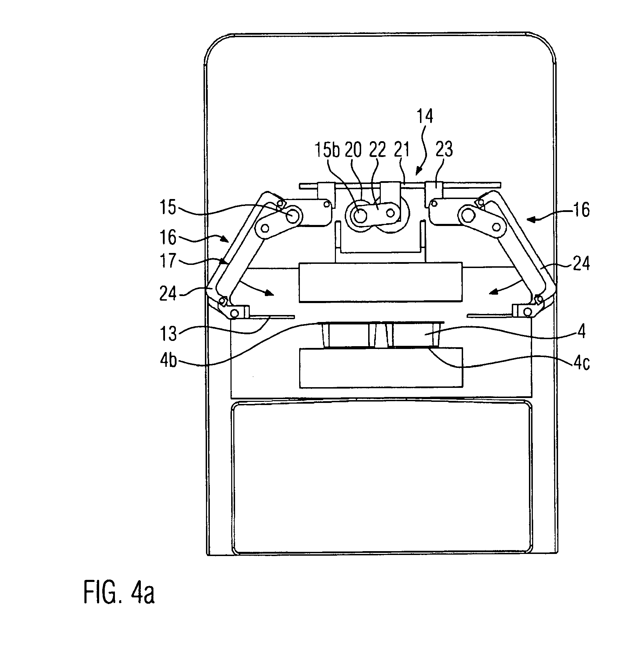

Figur 2 zeigt die Schalenverschließmaschine 1 ohne Schutzabdeckung 5. Ein Greifersystem 14 umfasst zwei Führungen 15 und jeweils einen Greiferarm 16, der entlang der Führung 15 bewegbar ist. Der Greiferarm 16 ist um die Führung 15 schwenkbar, und mittels einer Parallelogrammmechanik 17 kann der Schalengreifer 13 nach außen oder nach innen zur Schale 4 hin bewegt werden. Dabei bleibt der Schalengreifer 13 parallel zur Transportebene, die durch die Auflageebene des Schalenbodens 4c (siehe Fig. 4a) definiert ist, ausgerichtet. Die Bewegung der Greiferarme 16 in und gegen eine Transportrichtung R erfolgt zum Einbringen von unverschlossenen Schalen 4 vom Sammelband 7 in die Verschließstation 3 und zum Ausbringen von verschlossenen Schalen 4a aus der Verschließstation 3 auf das Ausführband 8.

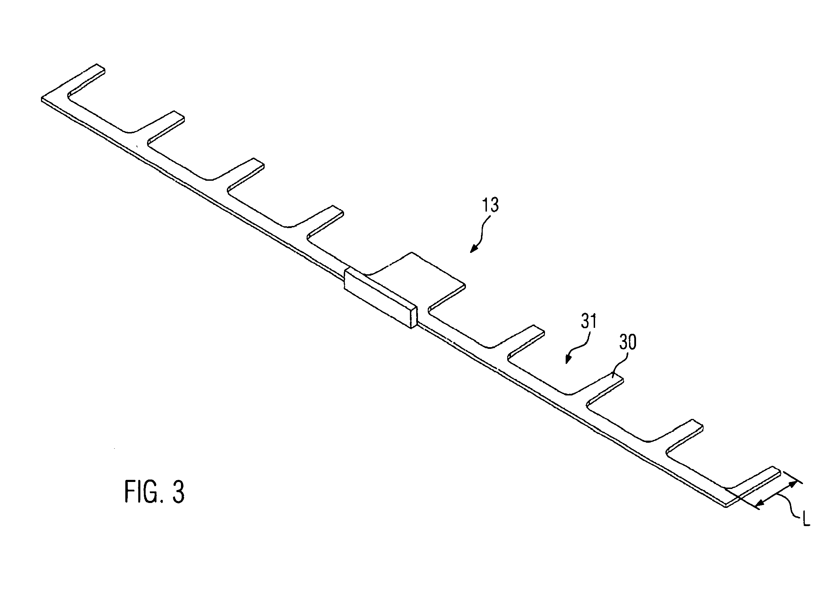

Figur 3 zeigt den Schalengreifer 13 eines der beiden Greiferarme 16. Er weist die Form eines Rechens auf, um bei einer Transportbewegung gleichzeitig je vier Schalen 4 pro Schalengreifer 13 in die Verschließstation 3 hinein und vier weitere zuvor gesiegelte Schalen 4a aus der Verschließstation 3 heraus zu bringen. Die Stege 30 haben vorzugsweise eine Länge L, die sich über einen Schwerpunkt der mit Produkt gefüllten Schale 4 quer zur Transportrichtung R unterhalb eines Schalenrandes 4b (siehe Fig. 4a) der Schalen 4 erstreckt, um die Schale 4 mittels des Schalengreifers 13 prozesssicher so kippen zu können, dass sich der Schalenboden 4c der Schalen 4 von dem Sammelband 7 abhebt. Dabei liegt jede Schale 4, 4a auf zwei Stegen 30 auf. Eine Anlageseite 31 des Schalengreifers 13 sorgt als Anschlag für eine nach aussen gerichtete Seite der Schalen 4, 4a und verhindert selbst bei hohen Beschleunigungen und Geschwindigkeiten ein Herausrutschen aus dem Schalengreifer 13.

Nach dem Kippen liegt die Schale 4 also nicht mehr mit ihrem gesamten Schalenboden 4c auf dem Sammelband 7 auf. Denkbar wäre es, dass sie noch mit einem linienförmigen Kontaktbereich auf dem Sammelband 7 aufliegt oder vollständig von diesem abgehoben ist.

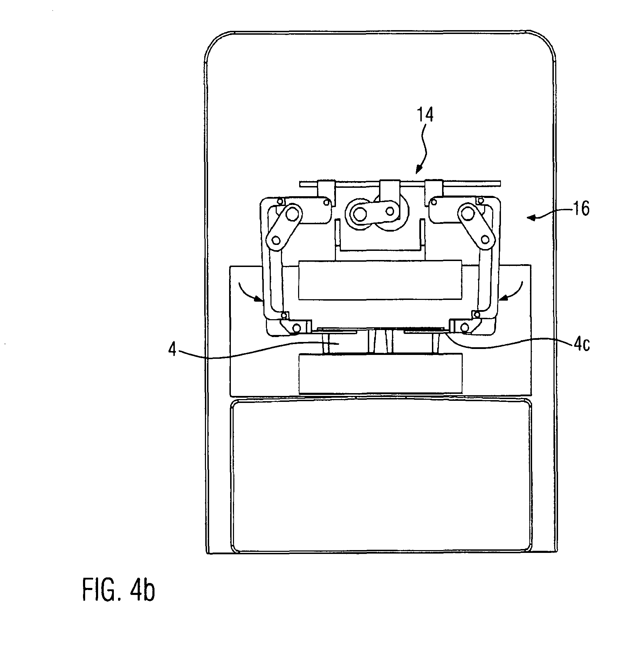

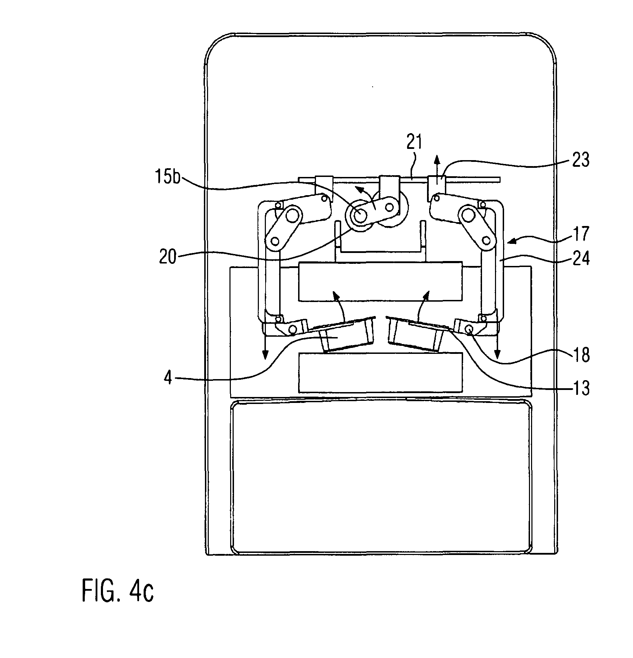

Figur 4a zeigt das Greifersystem 14 als Schnittansicht in der Transportrichtung R mit den Greiferarmen 16 und der Parallelogrammmechanik 17 in einer geöffneten Stellung. Die Greiferarme 16 schwenken um die Führungen 15 nach innen. Die Schwenkbewegung wird über die Drehung der Führungen 15 ausgeführt. In Figur 4b sind die Greiferarme 16 in einer Position gezeigt, in der die Schalengreifer 13 mit den Schalen 4 in Kontakt kommen und sich die Schalen zwischen den Stegen 30 befinden. In Fig. 4c ist das Greifersystem 14 in einer gekippten Stellung gezeigt. Dabei erzeugt ein Elektromotor 20, vorzugsweise ein Servomotor, mittels einer Mechanik 22 ein Anheben eines Gestänges 21, das mit der Parallelkinematik 17 über auf dem Gestänge 21 bewegliche Elemente 23 verbunden ist. Das Gestänge 21 ist mit an die Greiferarme 16 gekoppelt und bewegt sich in Transportrichtung R mit den Greiferarmen entlang einer Führungswelle 15b. Der Elektromotor 20 dreht die Führungswelle 15b und überträgt mit der Mechanik 22 die Bewegung auf das Gestänge 21 und die Elemente 23. Über die Lageveränderung eines Hebels 24 der Parallelkinematik 17, der eine Bewegung nach unten vollzieht, wird der Schalengreifer 13 gekippt, und er hebt die Schalen 4 an. Die Drehachse 18, um die die Schalen 4 dabei verschwenken, ist eine Drehachse im unteren Bereich der Parallelogrammmechanik 17 des Greiferarms 16.

Die Drehbewegung der Führungen 15 der Greiferarme 16 kann mit der Kippbewegung mittels des Elektromotors 20 kombiniert werden, um auch während der Öffnungs- oder Schließbewegung der Greiferarme 16 eine Auslenkung der Schalengreifer 13 in Bezug auf die horizontale Lage zu bewirken.

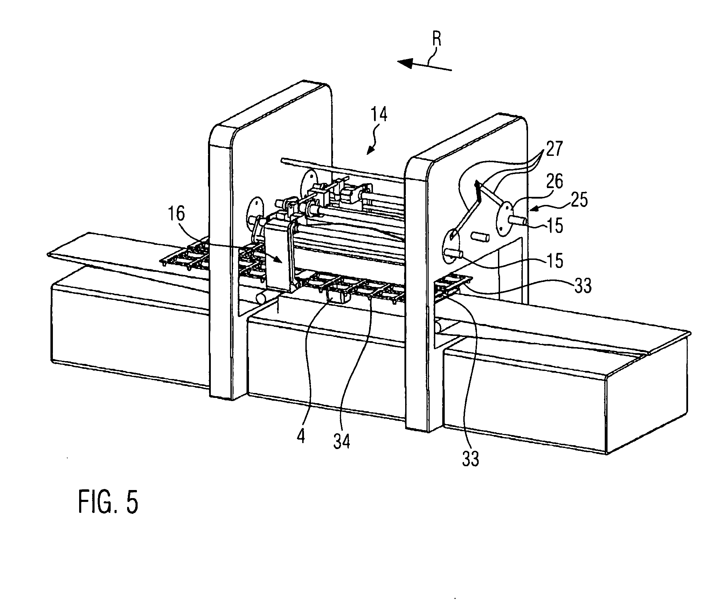

Figur 5 zeigt eine erfindungsgemäße Variante des Greifersystems 14 mit einer vertikalen Verstelleinrichtung 25, um die Führungen 15 vertikal anzuheben bzw. abzusenken. Diese vertikale Verstelleinrichtung 25 kann zusätzlich zu dem in den obigen Figuren gezeigten Greifersystems 14 eingesetzt sein oder auch nur in Verbindung mit der Greiferarmbewegung über die Führungen 15, um die Greiferarme 16 in die geschlossene oder geöffnete Stellung zu bewegen. Die Führungen 15 sind in Exzentern 26 gelagert und die Exzenter 26 selbst werden über die Hebel 27 synchron gedreht. Der Antrieb der Hebel 27 erfolgt über einen nicht dargestellten Elektromotor, vorzugsweise einen Servomotor. Mittels der vertikalen Verstelleinrichtung 25 kann eine Variante eines Schalengreifers 33 eingesetzt werden, der so konfiguriert ist, dass er, während er sich oberhalb der Schalen 4 befindet, die Schalen 4 an ihrem Schalenrand 4b in Transportrichtung R schiebt. Hierfür sind an dem Schalengreifer 33 Mitnehmer 34 vorgesehen, die den Schalenrand 4b im Bereich der Ecken erfassen können oder mit der nachlaufenden Seite des Schalenrands 4b, der quer zur Transportrichtung R ausgerichtet ist, beim Schieben der Schalen 4 in Kontakt stehen. Der Schalengreifer 33 selbst verhindert dabei eine Neigung der Schale 4 bei der Schiebebewegung, da er von oben als Gegenanlage für den Schalenrand 4b wirkt.

Die vertikale Verstelleinrichtung 25 kann in Verbindung mit dem Schalengreifer 13 aus den vorangehenden Figuren eingesetzt werden, um Schalen 4, die den gleichen Schalenrand 4b, aber unterschiedliche Schalenhöhen aufweisen, zu transportieren, ohne Veränderungen an dem Greifersystem 14 vornehmen zu müssen.

## Patentansprüche

1. Schalenverschließmaschine (1), umfassend ein Greifersystem (14) mit zwei Greiferarmen (16) zur Aufnahme von Schalen (4, 4a), um die Schalen (4) von einem Sammelband (7) abzunehmen und in eine Verschließstation (3) einzubringen, wobei das Greifersystem (14) dazu konfiguriert ist, die Schalen (4, 4a) mittels der Greiferarme (16) seitlich zu erfassen und vom Sammelband (7) abzuheben und in die Verschließstation (3) zu übergeben, wobei die Greiferarme (16) jeweils Schalengreifer (13) umfassen, **dadurch gekennzeichnet, dass** das Greifersystem (14) dazu konfiguriert ist, aufgenommene Schalen (4, 4a) um eine horizontale und in Transportrichtung (R) ausgerichtete Drehachse (18) zu kippen, wobei das Greifersystem (14) zwei Führungen (15) für die zwei Greiferarme (16) aufweist, wobei die Führungen (15) mittels eines Verstellantriebs (25) vertikal bewegbar sind.

2. Schalenverschließmaschine nach Anspruch 1, **dadurch gekennzeichnet, dass** das Greifersystem (14) einen Elektromotor (20) zum Kippen der Schalengreifer (13) um die Drehachse (18) umfasst.

3. Schalenverschließmaschine nach einem der vorangehenden Ansprüche, **dadurch gekennzeichnet, dass** die Drehachse (18) eine Drehachse einer Parallelogrammmechanik (17) ist, wobei die Parallelogrammmechanik (17) dazu konfiguriert ist, die Greiferarme (16) zu den Schalen (4, 4a) hin und von den Schalen (4, 4a) weg zu bewegen.

4. Schalenverschließmaschine nach Anspruch 3, **dadurch gekennzeichnet, dass** die Parallelogrammmechanik (17) einen Hebel (24) aufweist, mittels dessen der Schalengreifer (13) kippbar ist.

5. Schalenverschließmaschine nach einem der vorangehenden Ansprüche, **dadurch gekennzeichnet, dass** der vertikale Verstellantrieb (25) Exzenter (26) umfasst.

6. Schalenverschließmaschine nach einem der vorhergehenden Ansprüche, **dadurch gekennzeichnet, dass** der vertikale Verstellantrieb (25) einen Elektromotor aufweist.

## Claims

1. A tray sealer (1) comprising a gripper system (14) with two gripper arms (16) for picking up trays (4, 4a) so as to remove the trays (4) from a collecting belt (7) and introduce them into a sealing station (3), the gripper system (14) being configured to laterally grasp the trays (4, 4a) by means of the gripper arms (16), lift them off the collecting belt (7) and transfer them to the sealing station (3), each gripper arm (16) comprising tray grippers (13), **characterized in that** the gripper system (14) is configured to tilt picked-up trays (4, 4a) about a horizontal axis of rotation (18) oriented in the conveying direction (R), wherein the gripper system (14) comprises two guide units (15) for the two gripper arms (16), the guide units (15) being vertically movable by means of an adjustment drive (25).

2. The tray sealer according to claim 1, **characterized in that** the gripper system (14) comprises an electric motor (20) for tilting the tray grippers (13) about the axis of rotation (18).

3. The tray sealer according to one of the preceding claims, **characterized in that** the axis of rotation (18) is an axis of rotation of a rhomboid mechanism (17), the rhomboid mechanism (17) being configured for moving the gripper arms (16) towards and away from the trays (4, 4a).

4. The tray sealer according to claim 3, **characterized in that** the rhomboid mechanism (17) includes a lever (24) by means of which the tray gripper (13) can be tilted.

5. The tray sealer according to one of the preceding claims, **characterized in that** the vertical adjustment drive (25) includes eccentrics (26).

6. The tray sealer according to one of the preceding claims, **characterized in that** the vertical adjustment drive (25) includes an electric motor.

## Revendications

1. Machine de fermeture de barquettes (1), comprenant un système de préhenseur (14) à deux bras de préhenseur (16) destinés à recevoir des barquettes (4, 4a), en vue de prélever les barquettes (4) d'une bande de rassemblement ou de collecte (7) et de les introduire dans un poste de fermeture (3), le système de préhenseur (14) étant conçu pour saisir latéralement les barquettes (4, 4a) au moyen des bras de préhenseur (16) et les soulever de la bande de rassemblement (7) puis les transférer dans le poste de fermeture (3), et les bras de préhenseur (16) comportant respectivement des préhenseurs de barquettes (13), **caractérisée en ce que** le système de préhenseur (14) est configuré pour faire basculer des barquettes (4, 4a) ayant été saisies, autour d'un axe de rotation (18) horizontal et orienté dans la direction de transport (R), le système de préhenseur (14) présentant deux guides (15) pour les deux bras de préhenseur (16), et les guides (15) étant mobiles verticalement au moyen d'un entraînement de déplacement (25).

2. Machine de fermeture de barquettes selon la revendication 1, **caractérisée en ce que** le système de préhenseur (14) comprend un moteur électrique (20) pour faire basculer les préhenseurs de barquettes (13) autour de l'axe de rotation (18).

3. Machine de fermeture de barquettes selon l'une des revendications précédentes, **caractérisée en ce que** l'axe de rotation (18) est un axe de rotation d'un mécanisme à parallélogramme (17), le mécanisme à parallélogramme (17) étant configuré pour déplacer les bras de préhenseur (16) en direction des barquettes (4, 4a) et pour les éloigner des barquettes (4, 4a).

4. Machine de fermeture de barquettes selon la revendication 3, **caractérisée en ce que** le mécanisme à parallélogramme (17) présente un levier (24) au moyen duquel il est possible de faire basculer le préhenseur de barquettes (13).

5. Machine de fermeture de barquettes selon l'une des revendications précédentes, **caractérisée en ce que** l'entraînement de déplacement vertical (25) comprend des excentriques (26).

6. Machine de fermeture de barquettes selon l'une des revendications précédentes, **caractérisée en ce que** l'entraînement de déplacement vertical (25) comprend un moteur électrique.
